# EUROPEAN PATENT SPECIFICATION

(11) **EP 4 382 797 B1**
(45) Date of publication and mention of the grant of the patent: **08.10.2025**
(21) Application number: 23808648.2
(22) Date of filing: 13.04.2023
(51) Int. Cl.: F17C 1/12, F17C 3/02, F17C 3/08

(54) **PRESSURIZATION DEVICE FOR CRYOGENIC CONTAINER, AND CRYOGENIC CONTAINER**
DRUCKBEAUFSCHLAGUNGSVORRICHTUNG EINES KRYOGENEN BEHÄLTERS UND KRYOGENER BEHÄLTER
DISPOSITIF DE MISE SOUS PRESSION POUR RÉCIPIENT CRYOGÉNIQUE, ET RÉCIPIENT CRYOGÉNIQUE

(30) Priority: 25.10.2022 CN 202211311306
(43) Date of publication of application: 12.06.2024
(73) Proprietor: Nantong CIMC Energy Equipment Co., Ltd., Nantong, Jiangsu 226000 (CN); China International Marine Containers (Group) Co., Ltd., Shenzhen, Guangdong 518000 (CN); CIMC Enric Investment Holdings (Shenzhen) Co., Ltd., Shenzhen, Guangdong 518000 (CN)
(72) Inventor: SONG, Binjie, Nantong, Jiangsu 226000 (CN); JU, Xiaofeng, Nantong, Jiangsu 226000 (CN); SHEN, Weidong, Nantong, Jiangsu 226000 (CN); JIANG, Pingan, Nantong, Jiangsu 226000 (CN); GU, Feng, Nantong, Jiangsu 226000 (CN); GAO, Jianbing, Nantong, Jiangsu 226000 (CN); CHEN, Weifeng, Nantong, Jiangsu 226000 (CN); ZHANG, Yunkai, Nantong, Jiangsu 226000 (CN); LIU, Lei, Nantong, Jiangsu 226000 (CN); XU, Pengfei, Nantong, Jiangsu 226000 (CN); ZHANG, Peipei, Nantong, Jiangsu 226000 (CN)
(74) Representative: Studio Torta S.p.A.
(86) International application number: PCT/CN2023/088162
(87) International publication number: WO 2024/087532

(56) References cited:
- CN-A- 102 635 776
- CN-A- 107 228 273
- CN-A- 112 271 051
- CN-U- 202 912 201
- CN-U- 214 731 440
- DE-A1- 102019 129 740
- DE-C1- 10 033 410
- KR-A- 20220 074 533
- US-A- 4 091 634
- US-B2- 7 036 323

## Description

### TECHNICAL FIELD

The present application relates to the field of pressure vessels, in particular to a pressurizing device for a cryogenic vessel and a cryogenic vessel.

### BACKGROUND

Cryogenic vessels refer to vessels for storing liquids (such as liquid nitrogen, liquid oxygen, liquid argon, liquefied natural gas, liquid hydrogen and liquid helium) with boiling point temperature lower than -150°C. At present, the vessel for storing such liquids is generally composed of an inner vessel, a housing, a thermal insulation material and a supporting structure, etc., and a double-layer vessel structure may be formed by the inner vessel and housing. The double-layer structure divides the cryogenic vessel into an inner vessel space, a sandwich space between the inner vessel and the housing and an external environment space.

According to the storage and transportation requirements, internal media in cryogenic vessels often need to be pressurized. In the prior art, heat exchange is generally adopted, where the liquid phase and gas phase of the medium are usually led out to the external environmental space, and the heat is absorbed by the heat exchanger for pressurization. Alternatively, the external medium is introduced into the inner vessel space, where the pressure is controlled by the heat exchanger.

All the above-mentioned pressure control methods implemented by heat exchange require heat exchangers, and also corresponding pipes and valves for control are necessary, which has a complex structure and high cost. The document KR 20220074533 A discloses a pressurizing device for a cryogenic vessel.

### SUMMARY

Accordingly, the present disclosure provides a cryogenic vessel and a pressurizing device thereof , in accordance with claims which follow.

To solve the above technical problem, the present disclosure provides a pressurizing device for a cryogenic vessel, the cryogenic vessel comprising a shell, an inner vessel located in the shell, and a thermal insulation layer arranged on a periphery of the inner vessel, a gap being provided between the shell and the inner vessel to form a sandwich space in a vacuum environment, and the thermal insulation layer is spaced apart from the shell, wherein the pressurizing device comprises:
a fixing member located in the sandwich space, fixedly connected to the shell and spaced apart from the inner vessel;
a protruding member located in the sandwich space, fixedly connected to the inner vessel and protruding out of the thermal insulation layer; the protruding member being spaced apart from the fixing member; and the protruding member is made of a low temperature resistant material;
a heat conducting member rotatably connected to the fixing member; and the heat conducting member being made of a low temperature resistant material;
an operating member arranged outside the shell and rotatable relative to the shell; and
a connecting member, one end of the connecting member being fixedly connected to the operating member, another end of the connecting member extending into the sandwich space to be fixedly connected to the heat conducting member, and the connecting member capable of driving the heat conducting member to rotate to abut against the protruding member or rotate to be spaced apart from the protruding member in response to rotation of the operating member.

In an embodiment, the connecting member extends into the sandwich space through a mounting member; and
the mounting member is located in the sandwich space and is fixed and sealed with the shell, the mounting member is resilient and capable of telescoping within the sandwich space, the connecting member passes through the mounting member and is fixedly connected to an end of the mounting member away from the shell

In an embodiment, the mounting member is a corrugated pipe.

In an embodiment, the pressurizing device further comprises a limiting member located in the sandwich space; the limiting member and the protruding member are arranged on opposite two sides of the fixing member, so that the heat conducting member rotates between the limiting member and the protruding member; and
the limiting member is fixedly connected to the shell.

In an embodiment, the limiting member comprises a fixing part fixedly connected to the shell and a stopping part configured to abut against the heat conducting member.

In an embodiment, the pressurizing device further comprises a positioning block arranged outside the shell, the positioning block being provided with a first positioning groove and a second positioning groove, when the operating member is rotated to snap into the first positioning groove, the heat conducting member abuts against the limiting member, and when the operating member is rotated to snap into the second positioning groove, the heat conducting member abuts against the protruding member.

In an embodiment, the pressurizing device comprises a pressure measuring device being in communication with an interior of the inner vessel to measure pressure in the inner vessel; and a pressure display device connected to the pressure measuring device to receive and display the pressure in the inner vessel.

In an embodiment, the operating member is rotatably connected to the shell by means of a fitting member; the fitting member is fixed outside the shell, one end of the operating member is rotatably connected to the fitting member, and another end of the operating member is fixedly connected to the connecting member.

The present disclosure also provides a pressurizing device for a cryogenic vessel, the cryogenic vessel comprising a shell, an inner vessel located in the shell, and a thermal insulation layer arranged on a periphery of the inner vessel, a gap being provided between the shell and the inner vessel to form a sandwich space in a vacuum environment, and the thermal insulation layer is spaced apart from the shell, wherein the pressurizing device comprises:
a protruding member located in the sandwich space, fixedly connected to the inner vessel and protruding out of the thermal insulation layer;
a heat conducting member configured to be flexible, one end of the heat conducting member being fixedly connected to the shell, and another end of the heat conducting member capable of moving away from the protruding member or abutting the protruding member; and
a connecting member extending into the sandwich space from outside of the shell and being fixedly connected to the heat conducting member, and the connecting member extending outward from the shell;
wherein the connecting member is capable of approaching or moving away from the shell under performance of external force, and drives the heat conducting member to expand and contract away from the protruding member or abut against the protruding member.

In an embodiment, the heat conducting member is hollow inside, an end of the heat conducting member close to the shell is open, and an end of the heat conducting member close to the inner vessel is closed;
the connecting member is in a form of a rope or a chain, and extends into the heat conducting member to be connected to the heat conducting member; and the connecting member is fixedly connected to the end of the heat conducting member close to the inner vessel.

In an embodiment, the pressurizing device further comprises an operating member disposed outside the shell; the operating member capable of rotating relative to the shell, and the operating member being fixedly connected to the connecting member to drive the connecting member into or out of the sandwich space.

In an embodiment, the operating member is rotatably connected to the shell by means of a fitting member; the fitting member is fixed outside the shell, one end of the operating member is rotatably connected to the fitting member, and another end of the operating member is fixedly connected to the connecting member.

In an embodiment, the heat conducting member is hollow inside, an end of the heat conducting member close to the shell is open, and an end of the heat conducting member close to the inner vessel is closed; the connecting member is in a form of a rod and extends into the heat conducting member, and the connecting member is made of a low temperature resistant material; and
a connecting point between the connecting member and the heat conducting member is located in an area ranging from a center in a length direction of the heat conducting member to a position close to the inner vessel.

In an embodiment, a baffle plate is arranged in the heat conducting member, a periphery of the baffle plate being fixedly connected to an inner wall of the heat conducting member to close the end of the heat conducting member close to the inner vessel, and a surface of the baffle plate away from the inner vessel being fixedly connected to the connecting member; and
the baffle plate is made of a low temperature resistant material.

In an embodiment, a baffle plate is arranged in the heat conducting member, a periphery of the baffle plate being fixedly connected to an inner wall of the heat conducting member, and a surface of the baffle plate away from the inner vessel being fixedly connected to the connecting member.

In an embodiment, the pressurizing device further comprises an operating member arranged outside the shell, the operating member being fixedly connected to an end of the connecting member and protruding from a periphery of the connecting member.

The present disclosure also provides a cryogenic vessel comprising a shell, an inner vessel located in the shell, a thermal insulation layer arranged on a periphery of the inner vessel, and a pressurizing device, wherein a gap is provided between the shell and the inner vessel to form a sandwich space in a vacuum environment, the thermal insulation layer is spaced apart from the shell, and the pressurizing device is any one of the pressurizing devices as described above.

In an embodiment, the baffle plate is made of a low temperature resistant material.

In an embodiment, the shell comprises a outer housing provided with at least an opening and a cover plate, the cover plate is one-to-one corresponding to the opening, wherein the cover plate is covered at a corresponding opening, the cover plate is made of a low temperature resistant material, and the fixing member is fixedly connected to the cover plate.

In an embodiment, the cover plate has a circular or square cross section.

In an embodiment, a plurality of pressurizing devices are arranged at intervals along a circumferential direction of the shell; and
a plurality of pressurizing devices are arranged at intervals along an axial direction of the shell.

From the technical solution, it can be seen that the advantages and positive effects of the present disclosure are as follows:
The pressurizing device of the present disclosure creatively achieves the connection between the shell and the inner vessel through a rotatable heat conducting member, realizes the pressurization function by conducting the heat of the shell to the inner vessel and increasing the pressure inside the inner vessel by vaporizing the medium of the inner vessel. The pressurization mode does not need additional heat exchanger and corresponding pipes and valves, and has a simple structure and low cost.

The pressurizing device of the present disclosure creatively and directly realizes the contact and disconnection between the pressurizing device and the protruding member through the expansion and contraction of the heat conducting member, thereby implementing heat conduction and termination of heat conduction between the shell and the inner vessel, and implementing the pressurizing function. This pressurization mode does not need additional heat exchanger, and has a simple structure and low cost.

It is to be understood that both the foregoing general description and the following detailed description are exemplary and explanatory only and are not restrictive of the present disclosure.

### BRIEF DESCRIPTION OF THE DRAWINGS

FIG. 1 is a structural schematic illustration of a cryogenic vessel in embodiment I of the present disclosure.
FIG. 2 is a partial structural schematic illustration of the cryogenic vessel in embodiment I of the present disclosure.
FIG. 3 is a partial structural schematic illustration of the cryogenic vessel in embodiment II of the present disclosure.
FIG. 4 is a structural schematic illustration of the cryogenic vessel in embodiment III of the present disclosure.
FIG. 5 is a partial structural schematic illustration of the cryogenic vessel in embodiment IV of the present disclosure.
FIG. 6 is a partial structural schematic illustration of the cryogenic vessel in embodiment V of the present disclosure.

The reference signs are as follows: 1. cryogenic vessel; 11. shell; 111. outer housing; 112. cover plate; 12. inner vessel; 13. thermal insulation layer; 14. pressurizing device; 141. fixing member; 142. protruding member; 143. heat conducting member; 144. operating member; 145. connecting member; 146. mounting member; 147. limiting member; 1471. fixing part; 1472. stopping part; 148. fitting member; 15. pressure measuring device; 16. pressure display device;
21. shell; 22. inner vessel; 23. thermal insulation layer; 241. fixing member; 242. protruding member; 243. heat conducting member; 244. operating member; 245. connecting member; 246. mounting member; 247. limiting member; 2471. fixing part; 2472. stopping part; 248. fitting member;
3. cryogenic vessel; 31. shell; 32. inner vessel; 33. thermal insulation layer; 34. pressurizing device; 35. pressure measuring device; 36. pressure display device;
41. shell; 42. inner vessel; 43. thermal insulation layer; 442. protruding member; 443. heat conducting member; 444. operating member; 445. connecting member; 448. fitting member;
51. shell; 52. inner vessel; 53. thermal insulation layer; 542. protruding member; 543. heat conducting member; 544. operating member; 545. connecting member; 549. baffle plate.

### DETAILED DESCRIPTION OF THE EMBODIMENTS

Exemplary embodiments embodying the features and advantages of the present disclosure will be described in detail in the following description. It is to be understood that the present disclosure is capable of various variations in different embodiments without departing from the scope of the present disclosure and that the description and illustrations therein are intended to be illustrative in nature and not to limit the present disclosure.

To further illustrate the principle and structure of the present disclosure, preferred embodiments of the present disclosure are described in detail with reference to the accompanying drawings.

The present disclosure provides a cryogenic vessel, which is suitable for storing and transporting liquids with boiling point temperature lower than -150°C.

The cryogenic vessel comprises a shell, an inner vessel arranged in the shell, a thermal insulation layer arranged on a periphery of the inner vessel and a pressurizing device. The pressurizing device increases the pressure in the inner vessel by transferring the heat on the shell to the inner vessel, so as to achieve the purpose of pressurizing. The pressurizing device does not need a heat exchanger and corresponding pipes and valves, and has a simple structure, thereby reducing the cost.

The cryogenic vessel in the present application is described below by way of detailed embodiments.

### Embodiment I

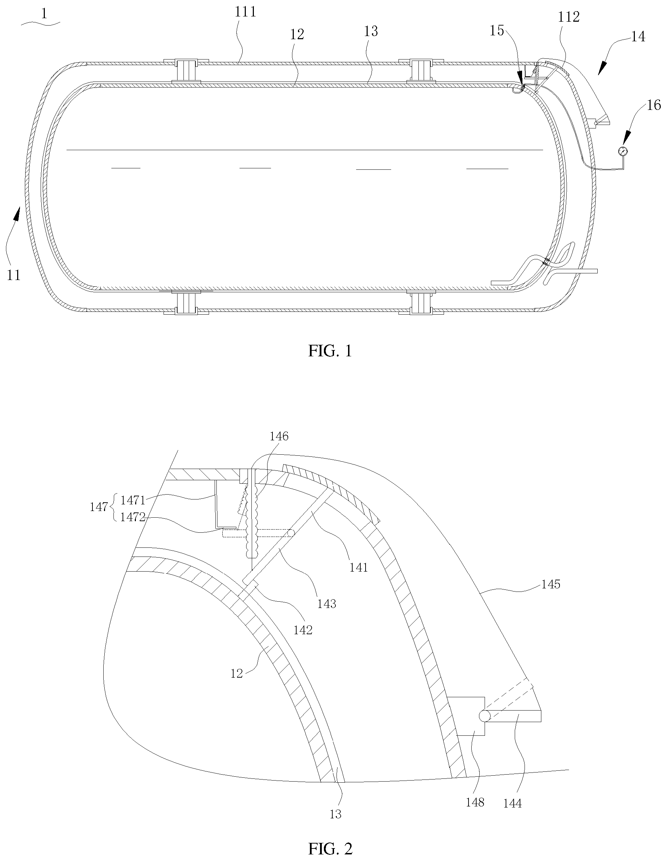

FIG. 1 is a structural schematic illustration of the cryogenic vessel in this embodiment, and FIG. 2 is a partial structural schematic illustration of the cryogenic vessel in this embodiment, referring to FIGS. 1 and 2, the cryogenic vessel 1 is of a horizontal type. The horizontal type means that the axis of the cryogenic vessel 1 extends in a horizontal direction during use.

For convenience of description, the axial direction of the cryogenic vessel 1 is defined as a longitudinal direction, and the horizontal direction is defined as a transverse direction perpendicular to the longitudinal direction.

The inner vessel 12 is used for storing cryogenic liquid. In this embodiment, a material of the inner vessel 12 is selected as a low temperature resistant material, in particular austenitic stainless steel.

The shell 11 is wrapped around the outer circumference of the inner vessel 12, and an inner wall of the shell 11 and an outer wall of the inner vessel 12 are spaced to form a sandwich space.

In this embodiment, the shell 11 includes a outer housing 111 and a cover plate 112. The outer housing 111 is provided with at least one opening, and the cover plate 112 is one-to-one corresponding to the opening, and the cover plate 112 is covered at the corresponding opening. The outer housing 111 is made of ordinary carbon steel, and the cover plate 112 is made of a low temperature resistant material such as austenitic stainless steel. The cover plate 112 is welded to the outer housing 111.

The cover plate 112 may be square or circular. When the cover plate 112 is circular, its diameter ranges from 300 mm to 500 mm. When the cover plate 112 is square, its side length ranges from 300 mm to 500 mm.

In other embodiments, the shell 11 does not need openings, and its material is a low temperature resistant material. That is, the entire shell 11 can withstand low temperature.

The sandwich space is a vacuum environment.

The thermal insulation layer 13 is wrapped around the outer circumference of the inner vessel 12, and there is a space between the thermal insulation layer 13 and the inner wall of the shell 11.

The pressurizing device 14 is in communication with the inner vessel 12 and the shell 11, transfers heat from the shell 11 to the inner vessel 12 through heat conduction, and causes the cryogenic liquid in the inner vessel 12 to absorb heat and convert it into gas, thereby increasing the pressure in the inner vessel 12.

The number of pressurizing devices 14 may be set according to actual needs, for example, one, two, three or other number. When a plurality of the pressurizing devices 14 is provided, the plurality of pressurizing devices 14 are arranged at intervals along the circumferential direction of the shell 11. The plurality of pressurizing devices 14 may also be arranged at intervals along the axial direction of the shell 11. The pressurizing device 14 may be positioned according to actual needs to achieve a specific purpose or more precise pressurization control.

The number of the pressurizing devices 14 is set corresponding to the number of the openings, that is, the number of the pressurizing devices 14 coincides with the number of the openings.

Specifically, each of the pressurizing devices 14 includes a fixing member 141, a protruding member 142, a heat conducting member 143, an operating member 144 and a connecting member 145.

The fixing member 141 is located in the sandwich space, fixedly connected to the shell 11, and spaced apart from the inner vessel 12. Specifically, the fixing member 141 is fixedly connected to the inner side of the cover plate 112. The fixing member 141 is made of a low temperature resistant material.

The fixing member 141 may be arranged obliquely or vertically, i.e., the included angle between the fixing member 141 and the cover plate 112 may be set according to actual needs.

The protruding member 142 is located in the sandwich space, fixedly connected to the inner vessel 12 and projects out of the thermal insulation layer 13. There is a gap between the protruding member 142 and the fixing member 141, and the protruding member 142 is made of a low temperature resistant material.

The gap between the protruding member 142 and the fixing member 141 refers to a gap in a radial direction of the inner vessel 12.

The heat conducting member 143 and the fixing member 141 are rotatably connected. The heat conducting member 143 is made of a low temperature resistant material. Specifically, a fixing hole is provided at an end of the fixing member 141 away from the shell 11, a connecting hole is provided at one end of the heat conducting member 143, and a rotating shaft is provided in the fixing hole and the connecting hole at the same time, so that the heat conducting member 143 can be rotatably connected to the fixing member 141.

Specifically, the heat conducting member 143 is in the shape of a plate. A width of the heat conducting member 143 is 5% to 20% of a width of the shell 11. Specifically, the width of the heat conducting member 143 is 200 mm to 400 mm. The width is the dimension along the horizontal direction.

When the number of pressurizing devices 14 is plural, the plurality of pressurizing devices 14 may be provided at intervals in the circumferential direction, that is, the plurality of pressurizing devices 14 may be provided in the same area.

A plurality of pressurizing devices 14 are arranged in different areas at intervals along an axial direction.

Accordingly, the fixing member 141 is in a shape of a plate, and its width is adapted to the width of the heat conducting member 143. The protruding member 142 is in a shape of a plate, and its width is adapted to the width of the heat conducting member 143.

The operating member 144 is disposed outside the shell 11 and can be rotated relative to the shell 11. In particular, the operating member 144 is rotatably connected to the shell 11 by means of the fitting member 148. The fitting member 148 is fixed outside the shell 11. One end of the operating member 144 is rotatably connected to the fitting member 148 and another end thereof is fixedly connected to the connecting member 145.

In this embodiment, the fitting member 148 is in the shape of a plate, and the operating member 144 is in the shape of a rod. A fitting hole is provided at the end of the fitting member 148 away from the shell 11, a rotating hole is provided at one end of the operating member 144, and a hinge shaft is provided in the fitting hole and the rotating hole at the same time, so that the operating member 144 can be rotatably connected to the fitting member 148.

One end of the connecting member 145 is fixedly connected to the operating member 144, another end of the connecting member extends into the sandwich space to be fixedly connected to the heat conducting member 143, and the connecting member 145 is capable of driving the heat conducting member 143 to rotate to abut against the protruding member 142 or rotate to be spaced apart from the protruding member 142 in response to rotation of the operating member 144.

The connecting member 145 extends into the sandwich space through the mounting member 146. In particular, the mounting member 146 is located within the sandwich space and is fixedly connected to the shell 11 in a sealing manner. The shell 11 is provided with a through hole, and the mounting member 146 is penetrated into the through hole.

The heat conducting member 146 is hollow inside, an end of the heat conducting member close to the shell 11 is open, and an end of the heat conducting member close to the inner vessel is closed. The mounting member 146 is resilient and capable of telescoping within the sandwich space. In this embodiment, the mounting member 146 is a corrugated pipe.

The connecting member 145 passes through the mounting member 146 and is fixedly connected to the end of the mounting member 146 away from the shell 11. That is, both ends of the connecting member 145 pass through the mounting member 146, and the penetrating ends are fixedly connected to the heat conducting member 143 and the mounting member 146, respectively.

The connecting member 145 can be moved outward by the operating member 144, which causes the mounting member 146 to contract, thereby causing the heat conducting member 143 to rotate. The connecting member 145 can also be moved inward by the operating member 144, so that the mounting member 146 is opened, thereby driving the heat conducting member 143 to rotate.

When the heat conducting member 143 is rotated, the heat conducting member 143 can be rotated to abut against or away from the protruding member 142. When the heat conducting member 143 abuts against the protruding member 142, the heat conducting member 143, the protruding member 142 and the fixing member 141 jointly connect the shell 11 and the inner vessel 12, thereby transferring heat from the shell 11 to the inner vessel 12 through heat conduction, so that the liquid in the inner vessel 12 is vaporized into gas, thereby increasing the pressure of the inner vessel 12.

There is no heat conduction between the shell 11 and the inner vessel 12 when the heat conducting member 143 moves away from the protruding member 142.

In this embodiment, when the heat conducting member 143 abuts against the protruding member 142, the heat conducting member 143 is parallel to the fixing member 141.

The pressurizing device 14 also includes a limiting member 147 located in the sandwich space. The limiting member 147 and the protruding member 142 are arranged on opposite two sides of the fixing member 141, so that the heat conducting member 143 rotates between the limiting member 147 and the protruding member 142.

The mounting member 146 and the limiting member 147 are located on the same side of the fixing member 141.

Therefore, in this embodiment, when the mounting member 146 is in the contracted state, the heat conducting member 143 abuts against the limiting member 147, and when the mounting member 146 is in the expanded state, the heat conducting member 143 abuts against the protruding member 142.

The limiting member 147 is fixedly connected to the shell 11. Specifically, the limiting member 147 includes a fixing part 1471 and a stopping part 1472. The fixing part 1471 is fixedly connected to the shell 11, and the stopping part 1472 is configured to abut against the heat conducting member 143. The stopping part 1472 is abutted by a parallel fit with the thermal conducting member 143.

In this embodiment, the stopping part 1472 extends horizontally, and when the heat conducting member 143 rotates to abut against the stopping part 1472, the heat conducting member 143 extends horizontally.

The pressurizing device 14 also comprises a positioning block arranged outside the shell 11, and the positioning block is provided with a first positioning groove and a second positioning groove. When the operating member 144 is rotated to be engaged in the first positioning groove, the heat conducting member 143 abuts against the limiting member 147, and when the operating member 144 is rotated to be engaged in the second positioning groove, the heat conducting member 143 abuts against the protruding member 142.

The pressurizing device 14 includes a pressure measuring device 15 and a pressure display device 16. The pressure measuring device 15 is in communication with the inside of the inner vessel 12 to measure the pressure in the inner vessel 12, and the pressure display device 16 is connected to the pressure measuring device 15 to receive and display the pressure in the inner vessel 12.

The cryogenic vessel 1 is used as follows:
In an initial state, the heat conducting member 143 is disconnected from the protruding member 142.

When the pressure value in the inner vessel 12 displayed by the pressure display device 16 reaches the lower limit value or the pressurization is required in other cases, the heat conducting member 143 is rotated to abut against the protruding member 142 in response to the rotation of the operating member 144, thereby transferring the heat of the shell 11 to the medium in the inner vessel 12, thereby vaporizing the medium and implementing the pressurization function.

In this embodiment, the operating member 144 is rotated upward so that the mounting member 146 is opened, and the heat conducting member 143 is rotated to abut against the protruding member 142.

When the pressure value on the pressure display device 16 reaches the upper limit value, the operating member 144 is rotated so that the heat conducting member 143 moves from the protruding member 142, and heat is no longer transferred to the inner vessel 12.

In this embodiment, the operating member 144 is rotated downward so that the mounting member 146 is contracted and the heat conducting member 143 is rotated to abut against the limiting member 147.

In this embodiment, the shell 11 and the inner vessel 12 of the cryogenic vessel 1 are connected creatively by the rotatable heat conducting member 143 of the pressurizing device 14, which implements the pressurization function by conducting the heat of the shell 11 to the inner vessel 12 and increasing the pressure inside the inner vessel 12 by vaporizing the medium of the inner vessel 12. This pressurization mode does not need additional heat exchanger, and has a simple structure and low cost.

### Embodiment II

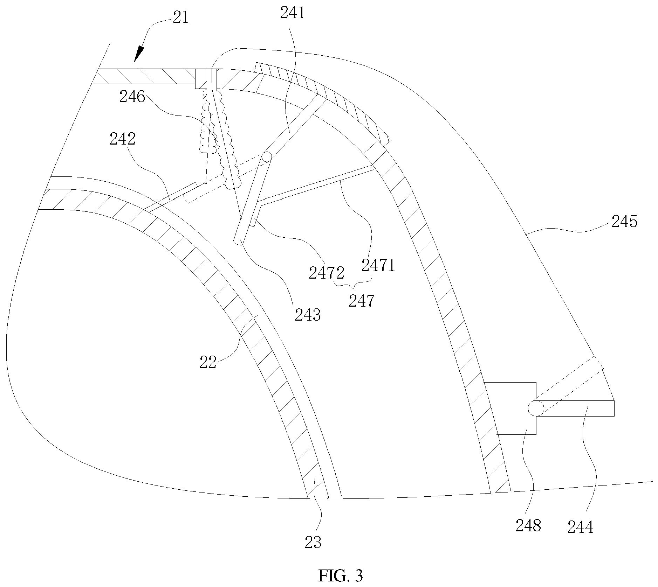

FIG. 3 shows a partial structural schimatic illustration of the cryogenic vessel in this embodiment. Referring to FIG. 3, this embodiment differs from Embodiment I in the position of the limiting member 247 and the structure of the limiting member 247.

In this embodiment, the protruding member 242 and the mounting member 246 are located on the same side of the fixing member 241, and the limiting member 247 and the mounting member 246 are arranged on opposite two sides of the fixing member.

Both the fixing part 2471 and the stopping part 2472 of the limiting member 247 are arranged obliquely, and an included angle between the fixing part 2471 and the stopping part 2472 is an obtuse angle. The stopping part 2471 is abutted by a parallel fit with the thermal conducting member 243.

In this embodiment, when the mounting member 246 is in the contracted state, the heat conducting member 243 abuts against the protruding member 242, and when the mounting member 246 is in the expanded state, the heat conducting member 243 abuts against the limiting member 247.

Other features of the cryogenic vessel in this embodiment, such as the shell 21, the inner vessel 22, the thermal insulation layer 23, the fixing member 241, the protruding member 242, the heat conducting member 243, the operating member 244, the connecting member 245, the mounting member 246, and the fitting member 248, can be referred to Embodiment I and will not be described in detail.

### Embodiment III

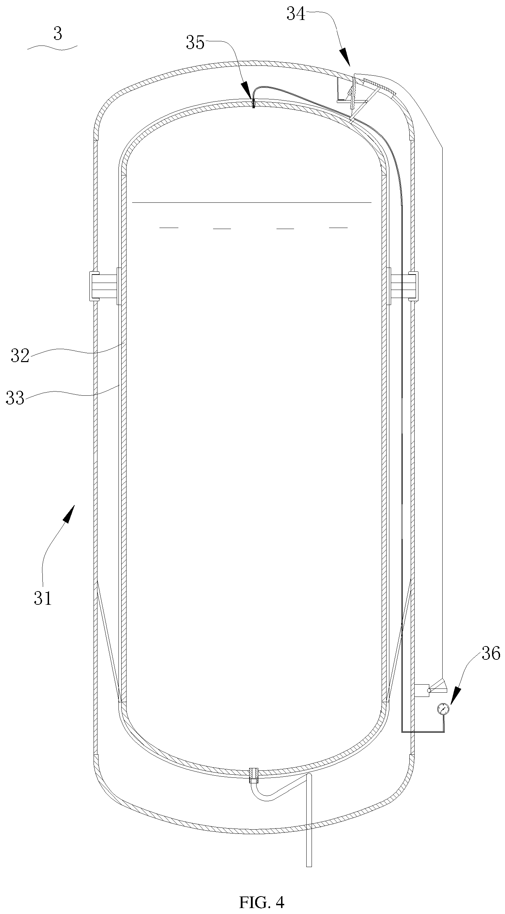

FIG. 4 shows a structural schematic illustration of the cryogenic vessel in this embodiment. Referring to FIG. 4, the cryogenic vessel 3 in this embodiment is a vertical vessel, vertical means that the axis of the cryogenic vessel 3 extends in the vertical direction during use.

Both the axis of the shell 31 and the axis of the inner vessel 32 in this embodiment extend vertically. Other features such as the thermal insulation layer 33, the pressurizing device 34, the pressure measuring device 35 and the pressure display device 36 in this embodiment, can be referred to Embodiment I and will not be described in detail.

### Embodiment IV

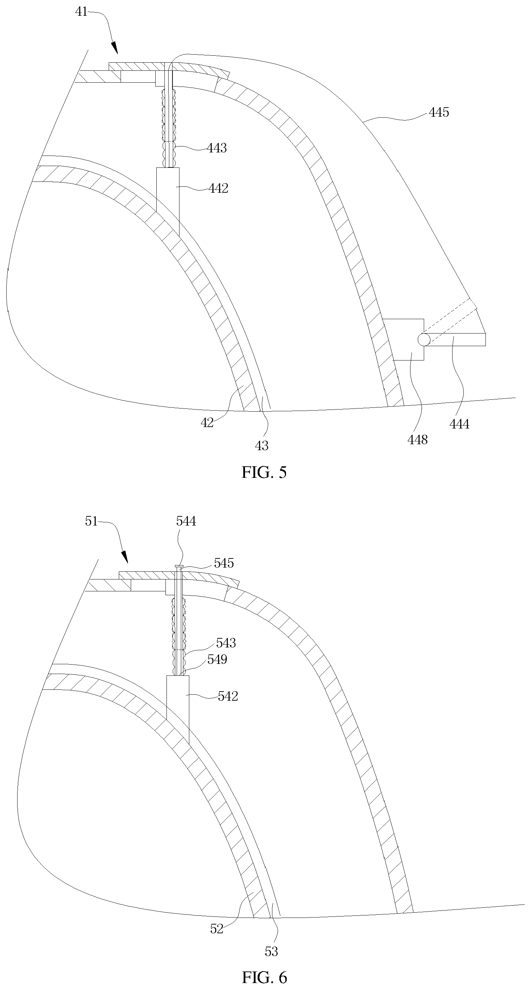

FIG. 5 shows a partial structural schematic illustration of the cryogenic vessel in this embodiment. Referring to FIG. 5, this embodiment is different from Embodiment I in the structure of the pressurizing device.

The pressurizing device includes a protruding member 442, a heat conducting member 443, and a connection member 445. The heat conducting member 443 is flexible. One end of the heat conducting member 443 is fixedly connected to the shell 41, and another end thereof can move away from or abut against the protruding member 442. That is, one end of the heat conducting member 443 is fixedly connected to the shell 41, and another end thereof is telescopic in the sandwich space. When the heat conducting member 443 is elongated, it contacts with the protruding member 442 to conduct heat. When the heat conducting member 443 is contracted, it is disconnected from the protruding member 442 to terminate heat conduction.

The heat conducting member 443 is made of a low temperature resistant material.

Specifically, the heat conducting member 443 is hollow inside, an end of the heat conducting member close to the shell 41 is open, and an end of the heat conducting member close to the inner vessel 42 is closed. In this embodiment, the heat conducting member 443 is a corrugated pipe.

The heat conducting member 443 is fixedly connected to the inner side of the cover plate.

The connecting member 445 extends from the outside of the shell 41 into the sandwich space and is fixedly connected to the heat conducting member 443, and the connecting member 445 extends outwardly from the shell 41. The connecting member 445 can move under the performance of external force, and drive the heat conducting member 443 to expand and contract, so as to move away from or abut against the protruding member 442.

Specifically, the connecting member 445 extends into the heat conducting member 443 and is connected to the heat conducting member 443 in the form of a rope or a chain. The connecting member 445 is fixedly connected to the end of the heat conducting member close to the inner vessel 42.

Referring to the direction of the view in FIG. 5, the connecting member 445 is fixedly connected to the bottom of the heat conducting member 443 so as to sufficiently ensure that the heat conducting member 443 is separated from the protruding member 442.

The pressurizing device also includes an operating member 444 disposed outside the shell 41. The operating member 444 is rotatable relative to the shell 41, and the operating member 444 is fixedly connected to the connecting member 445 to drive the connecting member 445 into or out of the sandwich space.

In particular, the operating member 444 is rotatably connected to the shell 41 by the fitting member 448. The fitting member 448 is positioned outside the shell 41. One end of the operating member 444 is rotatably connected to the fitting member 448 and another end thereof is fixedly connected to the connecting member 445.

The cryogenic vessel is used as follows:
in an initial state, the heat conducting member 443 is in a contracted state and is disconnected from the protruding member 442.

When pressurization is required, the operating member 444 is rotated upward so that the heat conducting member 443 is opened and the heat conducting member 443 is brought into abut against the protruding member 442.

When the pressure is satisfied, the operating member 444 is rotated so that the heat conducting member 443 is contracted by the connecting member 445 and is disconnected from the protruding member 442, hence heat is no longer transferred to the inner vessel 42.

In this embodiment, the heat conducting member 443 and the protruding member 442 are positioned in the same straight line, and the end face of the heat conducting member 443 is brought into abut against the end face of the protruding member 442. In other embodiments, the heat conducting member 443 and the protruding member 442 may also be disposed in a misaligned manner. When the heat conducting member 443 is elongated, its circumferential side surface abuts against the circumferential side surface of the protruding member 442.

The pressurizing device in this embodiment directly achieves connection and disconnection with the protruding member 442 through the expansion and contraction of the heat conducting member 443, thereby implementing heat conduction and termination of heat conduction between the shell 41 and the inner vessel 42, and implementing the pressurizing function. This pressurization mode does not need additional heat exchanger, and has a simple structure and low cost. Other features of the cryogenic vessel in this embodiment, such as the shell 41, the inner vessel 42, and the thermal insulation layer 43, can be referred to Embodiment I and will not be described in detail.

### Embodiment V

FIG. 6 shows a partial structural schematic illustration of the cryogenic vessel in this embodiment. Referring to FIG. 6, this embodiment differs from the Embodiment IV in the structure of the connecting member 545.

The heat conducting member 543 is hollow inside, an end of the heat conducting member close to the shell 51 is open, and an end of the heat conducting member close to the inner vessel 52 is closed. The connecting member 545 is rod-shaped and extends into the heat conducting member 543. The connecting member 545 is made of a low temperature resistant material.

A connecting point between the connecting member 545 and the heat conducting member 543 is located in an area ranging from a center in a length direction of the heat conducting member 543 to a position close to the inner vessel 52.

A baffle plate 549 is arranged in the heat conducting member 543, a periphery of the baffle plate 549 is fixedly connected to an inner wall of heat conducting member 543, and a surface of the baffle plate 549 away from the inner vessel 52 is fixedly connected to the connecting member 545. The baffle plate 549 is made of a low temperature resistant material.

Referring to the direction of view of FIG. 6, the baffle plate 549 in this embodiment is fixedly connected to the bottom of the heat conducting member 543 and closes the end of the heat conducting member 543 close to the inner vessel 52. In other embodiments, the baffle plate 549 may also be disposed in the middle of the heat conducting member 543 and other locations below the middle.

The pressurizing device further includes an operating member 544 provided outside the shell 51, and the operating member 544 is fixedly connected to the end of the connecting member 545 and protrudes from the periphery of the connecting member 545.

The heat conducting member 543 is pushed inward by the operating member 544 so that the heat conducting member 543 is opened and abuts against the protruding member 542. The operating member 544 is pulled outward so that the heat conducting member 543 is contracted and disconnected from the protruding member 542.

The cryogenic vessel is used as follows:
in an initial state, the heat conducting member 543 is in a contracted state and is disconnected from the protruding member 542.

When pressurization is required, the operating member 544 is pressed downward so that the heat conducting member 543 is opened, and the heat conducting member 543 is brought into contact with the protruding member 542.

When the pressure is satisfied, the operating member 544 is pulling up so that the heat conducting member 543 is contracted by the connecting member 545 and disconnected from the protruding member 542, hence heat is no longer transferred to the inner vessel 52.

Other features of the cryogenic vessel in this embodiment, such as the shell 51, the inner vessel 52, and the thermal insulation layer 53, can be referred to Embodiment IV and will not be described in detail.

From the technical solution, it can be seen that the advantages and positive effects of the present disclosure are as follows:
The pressurizing device of the present disclosure creatively achieves the connection between the shell and the inner vessel through a rotatable heat conducting member, realizes the pressurization function by conducting the heat of the shell to the inner vessel and increasing the pressure inside the inner vessel by vaporizing the medium of the inner vessel. The pressurization mode does not need additional heat exchanger and corresponding pipes and valves, and has a simple structure and low cost.

The pressurizing device of the present disclosure creatively and directly realizes the contact and disconnection between the pressurizing device and the protruding member through the expansion and contraction of the heat conducting member, thereby implementing heat conduction and termination of heat conduction between the shell and the inner vessel, and implementing the pressurizing function. This pressurization mode does not need additional heat exchanger, and has a simple structure and low cost.

## Claims

1. A pressurizing device (14,34) for a cryogenic vessel (1,3) , the cryogenic vessel (1,3) comprising a shell (11,21,31,41,51), an inner vessel (12,22,32,42,52) located in the shell (11,21,31,41,51), and a thermal insulation layer (13,23,33,43,53) arranged on a periphery of the inner vessel (12,22,32,42,52), a gap being provided between the shell (11,21,31,41,51) and the inner vessel (12,22,32,42,52) to form a sandwich space in a vacuum environment, and the thermal insulation layer (13,23,33,43,53) is spaced apart from the shell (11,21,31,41,51), wherein the pressurizing device (14,34) comprises:
a fixing member (141,241) located in the sandwich space, fixedly connected to the shell (11,21,31,41,51) and spaced apart from the inner vessel (12,22,32,42,52);
a protruding member (142,242,442,542) located in the sandwich space, fixedly connected to the inner vessel (12,22,32,42,52) and protruding out of the thermal insulation layer (13,23,33,43,53); the protruding member (142,242,442,542) being spaced apart from the a fixing member (141,241); and the protruding member (142,242,442,542) is made of a low temperature resistant material;
a heat conducting member (143,243,443,543) rotatably connected to the a fixing member (141,241); and the heat conducting member (143,243,443,543) being made of a low temperature resistant material;
an operating member (144,244,444,544) arranged outside the shell (11,21,31,41,51) and rotatable relative to the shell (11,21,31,41,51); and
a connecting member (145,245,445,545), one end of the connecting member (145,245,445,545) being fixedly connected to the operating member (144,244,444,544), another end of the connecting member (145,245,445,545) extending into the sandwich space to be fixedly connected to the heat conducting member (143,243,443,543), and the connecting member (145,245,445,545) capable of driving the heat conducting member (143,243,443,543) to rotate to abut against the protruding member (142,242,442,542) or rotate to be spaced apart from the protruding member (142,242,442,542) in response to rotation of the operating member (144,244,444,544).

2. The pressurizing device (14,34) according to claim 1, wherein the connecting member (145,245,445,545) extends into the sandwich space through a mounting member (146,246); and
the mounting member (146,246) is located in the sandwich space and is fixed and sealed with the shell (11,21,31,41,51), the mounting member (146,246) is resilient and capable of telescoping within the sandwich space, the connecting member (145,245,445,545) passes through the mounting member (146,246) and is fixedly connected to an end of the mounting member (146,246) away from the shell (11,21,31,41,51).

3. The pressurizing device (14,34) according to claim 1, wherein the pressurizing device (14,34) further comprises a limiting member (147,247) located in the sandwich space; the limiting member (147,247) and the protruding member (142,242,442,542) are arranged on opposite two sides of the a fixing member (141,241), so that the heat conducting member (143,243,443,543) rotates between the limiting member (147,247) and the protruding member (142,242,442,542); and
the limiting member (147,247) is fixedly connected to the shell (11,21,31,41,51).

4. The pressurizing device (14,34) according to claim 3, wherein the limiting member (147,247) comprises a fixing part (1471,2471) fixedly connected to the shell (11,21,31,41,51) and a stopping part (1472,2472) configured to abut against the heat conducting member (143,243,443,543).

5. The pressurizing device (14,34) according to claim 3, wherein the pressurizing device (14,34) further comprises a positioning block arranged outside the shell (11,21,31,41,51), the positioning block being provided with a first positioning groove and a second positioning groove; and when the operating member (144,244,444,544) is rotated to snap into the first positioning groove, the heat conducting member (143,243,443,543) abuts against the limiting member (147,247), and when the operating member (144,244,444,544) is rotated to snap into the second positioning groove, the heat conducting member (143,243,443,543) abuts against the protruding member (142,242,442,542).

6. The pressurizing device (14,34) according to claim 1, wherein the pressurizing device (14,34) comprises:
a pressure measuring device (15,35) being in communication with an interior of the inner vessel (12,22,32,42,52) to measure pressure in the inner vessel (12,22,32,42,52); and
a pressure display device (16,36) connected to the pressure measuring device (15,35) to receive and display the pressure in the inner vessel (12,22,32,42,52).

7. The pressurizing device (14,34) according to claim 1, wherein the operating member (144,244,444,544) is rotatably connected to the shell (11,21,31,41,51) by means of a fitting member (148,248,448), wherein the fitting member (148,248,448) is fixed outside the shell (11,21,31,41,51), one end of the operating member (144,244,444,544) is rotatably connected to the fitting member, and another end of the operating member (144,244,444,544) is fixedly connected to the connecting member (145,245,445,545).

8. A pressurizing device (14,34) for a cryogenic vessel (1,3), the cryogenic vessel (1,3) comprising a shell (11,21,31,41,51), an inner vessel (12,22,32,42,52) located in the shell (11,21,31,41,51), and a thermal insulation layer (13,23,33,43,53) arranged on a periphery of the inner vessel (12,22,32,42,52), a gap being provided between the shell (11,21,31,41,51) and the inner vessel (12,22,32,42,52) to form a sandwich space in a vacuum environment, and the thermal insulation layer (13,23,33,43,53) is spaced apart from the shell (11,21,31,41,51), wherein the pressurizing device (14,34) comprises:
a protruding member (142,242,442,542) located in the sandwich space, fixedly connected to the inner vessel (12,22,32,42,52) and protruding out of the thermal insulation layer (13,23,33,43,53);
a heat conducting member (143,243,443,543) configured to be flexible, one end of the heat conducting member (143,243,443,543) being fixedly connected to the shell (11,21,31,41,51), and another end of the heat conducting member (143,243,443,543) capable of moving away from the protruding member (142,242,442,542) or abutting the protruding member (142,242,442,542); and the heat conducting member (143,243,443,543) is made of a low temperature resistant material; and
a connecting member (145,245,445,545) extending into the sandwich space from outside of the shell (11,21,31,41,51) and being fixedly connected to the heat conducting member (143,243,443,543), and the connecting member (145,245,445,545) extending outward from the shell (11,21,31,41,51);
wherein the connecting member (145,245,445,545) is capable of approaching or moving away from the shell (11,21,31,41,51) under performance of external force, and drives the heat conducting member (143,243,443,543) to expand and contract away from the protruding member (142,242,442,542) or abut against the protruding member (142,242,442,542).

9. The pressurizing device (14,34) according to claim 8, wherein the heat conducting member (143,243,443,543) is hollow inside, an end of the heat conducting member (143,243,443,543) close to the shell (11,21,31,41,51) is open, and an end of the heat conducting member (143,243,443,543) close to the inner vessel (12,22,32,42,52) is closed;
wherein the connecting member (145,245,445,545) is in a form of a rope or a chain, and extends into the heat conducting member (143,243,443,543) to be connected to the heat conducting member (143,243,443,543); and
wherein the connecting member (145,245,445,545) is fixedly connected to the end of the heat conducting member (143,243,443,543) close to the inner vessel (12,22,32,42,52).

10. The pressurizing device (14,34) according to claim 9, wherein the pressurizing device (14,34) further comprises an operating member (144,244,444,544) disposed outside the shell (11,21,31,41,51); the operating member (144,244,444,544) capable of rotating relative to the shell (11,21,31,41,51), and the operating member (144,244,444,544) being fixedly connected to the connecting member (145,245,445,545) to drive the connecting member (145,245,445,545) into or out of the sandwich space;
wherein the operating member (144,244,444,544) is rotatably connected to the shell (11,21,31,41,51) by means of a fitting member (148,248,448), wherein the fitting member (148,248,448) is fixed outside the shell (11,21,31,41,51), one end of the operating member (144,244,444,544) is rotatably connected to the fitting member (148,248,448), and another end of the operating member (144,244,444,544) is fixedly connected to the connecting member (145,245,445,545).

11. The pressurizing device (14,34) according to claim 8, wherein the heat conducting member (143,243,443,543) is hollow inside, an end of the heat conducting member (143,243,443,543) close to the shell (11,21,31,41,51) is open, and an end of the heat conducting member (143,243,443,543) close to the inner vessel (12,22,32,42,52) is closed, wherein the connecting member (145,245,445,545) is in a form of a rod and extends into the heat conducting member (143,243,443,543), and the connecting member (145,245,445,545) is made of a low temperature resistant material; and
wherein a connecting point between the connecting member (145,245,445,545) and the heat conducting member (143,243,443,543) is located in an area ranging from a center in a length direction of the heat conducting member (143,243,443,543) to a position close to the inner vessel (12,22,32,42,52).

12. The pressurizing device (14,34) according to claim 11, wherein a baffle plate (549) is arranged in the heat conducting member (143,243,443,543), wherein a periphery of the baffle plate (549) is fixedly connected to an inner wall of the heat conducting member (143,243,443,543) to close the end of the heat conducting member (143,243,443,543) close to the inner vessel (12,22,32,42,52), and wherein a surface of the baffle plate (549) away from the inner vessel (12,22,32,42,52) is fixedly connected to the connecting member (145,245,445,545); and
wherein the baffle plate (549) is made of a low temperature resistant material.

13. The pressurizing device (14,34) according to claim 11, wherein the pressurizing device (14,34) further comprises an operating member (144,244,444,544) arranged outside the shell (11,21,31,41,51), the operating member (144,244,444,544) being fixedly connected to an end of the connecting member (145,245,445,545) and protruding from a periphery of the connecting member (145,245,445,545).

14. A cryogenic vessel (1,3) comprising a shell (11,21,31,41,51), an inner vessel (12,22,32,42,52) located in the shell (11,21,31,41,51), a thermal insulation layer (13,23,33,43,53) arranged on a periphery of the inner vessel (12,22,32,42,52), and a pressurizing device (14,34), wherein a gap is provided between the shell (11,21,31,41,51) and the inner vessel (12,22,32,42,52) to form a sandwich space in a vacuum environment, the thermal insulation layer (13,23,33,43,53) is spaced apart from the shell (11,21,31,41,51), and the pressurizing device (14,34) is the pressurizing device (14,34) according to any one of claims 1 to 7 or the pressurizing device (14,34) according to any one of claims 8 to 13.

15. The cryogenic vessel (1,3) according to claim 14, wherein the shell (11,21,31,41,51) comprises a outer housing (111) provided with at least an opening and a cover plate (112), wherein the cover plate (112) is one-to one corresponding to the opening, wherein the cover plate (112) is covered at a corresponding opening, the cover plate (112) is made of a low temperature resistant material, and the a fixing member (141,241) is fixedly connected to the cover plate (112).

## Patentansprüche

1. Druckbeaufschlagungsvorrichtung (14, 34) für einen Kryobehälter (1, 3), wobei der Kryobehälter (1, 3) eine Hülle (11, 21, 31, 41, 51), einen in der Hülle (11, 21, 31, 41, 51) angeordneten Innenbehälter (12, 22, 32, 42, 52) und eine am Umfang des Innenbehälters (12, 22, 32, 42, 52) angeordnete Wärmedämmschicht (13, 23, 33, 43, 53) umfasst, wobei zwischen der Hülle (11, 21, 31, 41, 51) und dem Innenbehälter (12, 22, 32, 42, 52) ein Spalt bereitgestellt ist, um in einer Vakuumumgebung einen Sandwichraum zu bilden, und die Wärmedämmschicht (13, 23, 33, 43, 53) von der Hülle (11, 21, 31, 41, 51) beabstandet ist, wobei die Druckbeaufschlagungsvorrichtung (14, 34) umfasst:
ein Befestigungselement (141, 241), das in dem Sandwichraum angeordnet ist, fest mit der Hülle (11, 21, 31, 41, 51) verbunden ist und von dem Innenbehälter (12, 22, 32, 42, 52) beabstandet ist;
ein hervorstehendes Element (142, 242, 442, 542), das in dem Sandwichraum angeordnet ist, fest mit dem Innenbehälter (12, 22, 32, 42, 52) verbunden ist und aus der Wärmedämmschicht (13, 23, 33, 43, 53) hervorsteht; wobei das hervorstehende Element (142, 242, 442, 542) von dem Befestigungselement (141, 241) beabstandet ist; und das hervorstehende Element (142, 242, 442, 542) aus einem niedrigtemperaturbeständigen Material hergestellt ist;
ein Wärmeleitelement (143, 243, 443, 543), das drehbar mit dem Befestigungselement (141, 241) verbunden ist; und wobei das Wärmeleitelement (143, 243, 443, 543) aus einem niedrigtemperaturbeständigen Material hergestellt ist;
ein Bedienelement (144, 244, 444, 544), das außerhalb der Hülle (11, 21, 31, 41, 51) angeordnet ist und relativ zur Hülle (11, 21, 31, 41, 51) drehbar ist; und
ein Verbindungselement (145, 245, 445, 545), wobei ein Ende des Verbindungselements (145, 245, 445, 545) fest mit dem Bedienelement (144, 244, 444, 544) verbunden ist, ein anderes Ende des Verbindungselements (145, 245, 445, 545) sich in den Sandwichraum erstreckt, um fest mit dem Wärmeleitelement (143, 243, 443, 543) verbunden zu sein, und das Verbindungselement (145, 245, 445, 545) in der Lage ist, das Wärmeleitelement (143, 243, 443, 543) so anzutreiben, dass es sich dreht, um an dem hervorstehenden Element (142, 242, 442, 542) anzuliegen, oder dass es sich so dreht, um von dem hervorstehenden Element (142, 242, 442, 542) als Reaktion auf die Drehung des Bedienelements (144, 244, 444, 544) beabstandet zu sein.

2. Druckbeaufschlagungsvorrichtung (14, 34) nach Anspruch 1, wobei sich das Verbindungselement (145, 245, 445, 545) durch ein Montageelement (146, 246) in den Sandwichraum erstreckt; und
das Montageelement (146, 246) in dem Sandwichraum angeordnet ist und an der Hülle (11, 21, 31, 41, 51) befestigt und abgedichtet ist, das Montageelement (146, 246) nachgiebig und in der Lage ist, innerhalb des Sandwichraums teleskopartig verschoben zu werden, das Verbindungselement (145, 245, 445, 545) durch das Montageelement (146, 246) verläuft und mit einem Ende des Montageelements (146, 246) fest verbunden ist, das von der Hülle (11, 21, 31, 41, 51) weg liegt.

3. Druckbeaufschlagungsvorrichtung (14, 34) nach Anspruch 1, wobei die Druckbeaufschlagungsvorrichtung (14, 34) ferner ein Begrenzungselement (147, 247) umfasst, das in dem Sandwichraum angeordnet ist; das Begrenzungselement (147, 247) und das hervorstehende Element (142, 242, 442, 542) auf zwei gegenüberliegenden Seiten eines Befestigungselements (141, 241) angeordnet sind, sodass sich das Wärmeleitelement (143, 243, 443, 543) zwischen dem Begrenzungselement (147, 247) und dem hervorstehenden Element (142, 242, 442, 542) dreht; und
das Begrenzungselement (147, 247) fest mit der Hülle (11, 21, 31, 41, 51) verbunden ist.

4. Druckbeaufschlagungsvorrichtung (14, 34) nach Anspruch 3, wobei das Begrenzungselement (147, 247) ein Befestigungsteil (1471, 2471), das fest mit der Hülle (11, 21, 31, 41, 51) verbunden ist, und ein Anschlagteil (1472, 2472) umfasst, das so konfiguriert ist, dass es an dem Wärmeleitelement (143, 243, 443, 543) anliegt.

5. Druckbeaufschlagungsvorrichtung (14, 34) nach Anspruch 3, wobei die Druckbeaufschlagungsvorrichtung (14, 34) ferner einen außerhalb der Hülle (11, 21, 31, 41, 51) angeordneten Positionierungsblock umfasst, wobei der Positionierungsblock mit einer ersten Positionierungsnut und einer zweiten Positionierungsnut versehen ist; und wenn das Bedienelement (144, 244, 444, 544) so gedreht wird, dass es in die erste Positionierungsnut einrastet, das Wärmeleitelement (143, 243, 443, 543) an dem Begrenzungselement (147, 247) anliegt, und wenn das Bedienelement (144, 244, 444, 544) so gedreht wird, dass es in die zweite Positionierungsnut einrastet, das Wärmeleitelement (143, 243, 443, 543) an dem hervorstehenden Element (142, 242, 442, 542) anliegt.

6. Druckbeaufschlagungsvorrichtung (14, 34) nach Anspruch 1, wobei die Druckbeaufschlagungsvorrichtung (14, 34) umfasst:
eine Druckmessvorrichtung (15, 35), die mit einem Inneren des Innenbehälters (12, 22, 32, 42, 52) in Verbindung steht, um den Druck im Innenbehälter (12, 22, 32, 42, 52) zu messen; und
eine Druckanzeigevorrichtung (16, 36), die mit der Druckmessvorrichtung (15, 35) verbunden ist, um den Druck im Innenbehälter (12, 22, 32, 42, 52) aufzunehmen und anzuzeigen.

7. Druckbeaufschlagungsvorrichtung (14, 34) nach Anspruch 1, wobei das Bedienelement (144, 244, 444, 544) mittels eines Passelements (148, 248, 448) drehbar mit der Hülle (11, 21, 31, 41, 51) verbunden ist, wobei das Passelement (148, 248, 448) außerhalb der Hülle (11, 21, 31, 41, 51) befestigt ist, ein Ende des Bedienelements (144, 244, 444, 544) drehbar mit dem Passelement verbunden ist und ein anderes Ende des Bedienelements (144, 244, 444, 544) fest mit dem Verbindungselement (145, 245, 445, 545) verbunden ist.

8. Druckbeaufschlagungsvorrichtung (14, 34) für einen Kryobehälter (1, 3), wobei der Kryobehälter (1, 3) eine Hülle (11, 21, 31, 41, 51), einen in der Hülle (11, 21, 31, 41, 51) angeordneten Innenbehälter (12, 22, 32, 42, 52) und eine am Umfang des Innenbehälters (12, 22, 32, 42, 52) angeordnete Wärmedämmschicht (13, 23, 33, 43, 53) umfasst, wobei zwischen der Hülle (11, 21, 31, 41, 51) und dem Innenbehälter (12, 22, 32, 42, 52) ein Spalt bereitgestellt ist, um in einer Vakuumumgebung einen Sandwichraum zu bilden, und die
Wärmedämmschicht (13, 23, 33, 43, 53) von der Hülle (11, 21, 31, 41, 51) beabstandet ist, wobei die Druckbeaufschlagungsvorrichtung (14, 34) umfasst:
ein hervorstehendes Element (142, 242, 442, 542), das in dem Sandwichraum angeordnet ist, fest mit dem Innenbehälter (12, 22, 32, 42, 52) verbunden ist und aus der Wärmedämmschicht (13, 23, 33, 43, 53) hervorsteht;
ein Wärmeleitelement (143, 243, 443, 543), das konfiguriert ist, um flexibel zu sein, wobei ein Ende des Wärmeleitelements (143, 243, 443, 543) fest mit der Hülle (11, 21, 31, 41, 51) verbunden ist und ein anderes Ende des Wärmeleitelements (143, 243, 443, 543) in der Lage ist, sich von dem hervorstehenden Element (142, 242, 442, 542) weg zu bewegen oder an dem hervorstehenden Element (142, 242, 442, 542) anzuliegen; und das Wärmeleitelement (143, 243, 443, 543) aus einem niedrigtemperaturbeständigen Material hergestellt ist; und
ein Verbindungselement (145, 245, 445, 545) sich von außerhalb der Hülle (11, 21, 31, 41, 51) in den Sandwichraum erstreckt und fest mit dem Wärmeleitelement (143, 243, 443, 543) verbunden ist, und das Verbindungselement (145, 245, 445, 545) sich von der Hülle (11, 21, 31, 41, 51) nach außen erstreckt;
wobei das Verbindungselement (145, 245, 445, 545) in der Lage ist, sich unter Einwirkung einer äußeren Kraft der Hülle (11, 21, 31, 41, 51) zu nähern oder sich von ihr weg zu bewegen, und das Wärmeleitelement (143, 243, 443, 543) antreibt, um sich von dem hervorstehenden Element (142, 242, 442, 542) weg auszudehnen und zusammenzuziehen oder an dem hervorstehenden Element (142, 242, 442, 542) anzuliegen.

9. Druckbeaufschlagungsvorrichtung (14, 34) nach Anspruch 8, wobei das Wärmeleitelement (143, 243, 443, 543) innen hohl ist, ein Ende des Wärmeleitelements (143, 243, 443, 543) nahe der Hülle (11, 21, 31, 41, 51) offen ist und ein Ende des Wärmeleitelements (143, 243, 443, 543) nahe dem Innenbehälter (12, 22, 32, 42, 52) geschlossen ist;
wobei das Verbindungselement (145, 245, 445, 545) die Form eines Seils oder einer Kette hat und sich in das Wärmeleitelement (143, 243, 443, 543) hinein erstreckt, um mit dem Wärmeleitelement (143, 243, 443, 543) verbunden zu werden; und
wobei das Verbindungselement (145, 245, 445, 545) fest mit dem Ende des Wärmeleitelements (143, 243, 443, 543) nahe dem Innenbehälter (12, 22, 32, 42, 52) verbunden ist.

10. Druckbeaufschlagungsvorrichtung (14, 34) nach Anspruch 9, wobei die Druckbeaufschlagungsvorrichtung (14, 34) ferner ein Bedienelement (144, 244, 444, 544) umfasst, das außerhalb der Hülle (11, 21, 31, 41, 51) angeordnet ist; wobei das Bedienelement (144, 244, 444, 544) in der Lage ist, sich relativ zu der Hülle (11, 21, 31, 41, 51) zu drehen, und wobei das Bedienelement (144, 244, 444, 544) fest mit dem Verbindungselement (145, 245, 445, 545) verbunden ist, um das Verbindungselement (145, 245, 445, 545) in den Sandwichraum hinein oder aus diesem heraus zu treiben;
wobei das Bedienelement (144, 244, 444, 544) mittels eines Passelements (148, 248, 448) drehbar mit der Hülle (11, 21, 31, 41, 51) verbunden ist, wobei das Passelement (148, 248, 448) außerhalb der Hülle (11, 21, 31, 41, 51) befestigt ist, ein Ende des Bedienelements (144, 244, 444, 544) drehbar mit dem Passelement (148, 248, 448) verbunden ist und ein anderes Ende des Bedienelements (144, 244, 444, 544) fest mit dem Verbindungselement (145, 245, 445, 545) verbunden ist.

11. Druckbeaufschlagungsvorrichtung (14, 34) nach Anspruch 8, wobei das Wärmeleitelement (143, 243, 443, 543) innen hohl ist, ein Ende des Wärmeleitelements (143, 243, 443, 543) nahe der Hülle (11, 21, 31, 41, 51) offen ist und ein Ende des Wärmeleitelements (143, 243, 443, 543) nahe dem Innenbehälter (12, 22, 32, 42, 52) geschlossen ist, wobei das Verbindungselement (145, 245, 445, 545) die Form einer Stange hat und sich in das Wärmeleitelement (143, 243, 443, 543) hinein erstreckt und das Verbindungselement (145, 245, 445, 545) aus einem niedrigtemperaturbeständigen Material hergestellt ist; und
wobei ein Verbindungspunkt zwischen dem Verbindungselement (145, 245, 445, 545) und dem Wärmeleitelement (143, 243, 443, 543) in einem Bereich angeordnet ist, der von einer Mitte in einer Längenrichtung des Wärmeleitelements (143, 243, 443, 543) bis zu einer Position nahe dem Innenbehälter (12, 22, 32, 42, 52) reicht.

12. Druckbeaufschlagungsvorrichtung (14, 34) nach Anspruch 11, wobei eine Prallplatte (549) in dem Wärmeleitelement (143, 243, 443, 543) angeordnet ist, wobei ein Umfang der Prallplatte (549) fest mit einer Innenwand des Wärmeleitelements (143, 243, 443, 543) verbunden ist, um das Ende des Wärmeleitelements (143, 243, 443, 543) nahe dem Innenbehälter (12, 22, 32, 42, 52) zu verschließen, und wobei eine von dem Innenbehälter (12, 22, 32, 42, 52) abgewandte Oberfläche der Prallplatte (549) fest mit dem Verbindungselement (145, 245, 445, 545) verbunden ist; und
wobei die Prallplatte (549) aus einem niedrigtemperaturbeständigen Material hergestellt ist.

13. Druckbeaufschlagungsvorrichtung (14, 34) nach Anspruch 11, wobei die Druckbeaufschlagungsvorrichtung (14, 34) ferner ein Bedienelement (144, 244, 444, 544) umfasst, das außerhalb der Hülle (11, 21, 31, 41, 51) angeordnet ist, wobei das Bedienelement (144, 244, 444, 544) fest mit einem Ende des Verbindungselements (145, 245, 445, 545) verbunden ist und von einem Umfang des Verbindungselements (145, 245, 445, 545) hervorsteht.

14. Kryobehälter (1, 3), umfassend eine Hülle (11, 21, 31, 41, 51), einen in der Hülle (11, 21, 31, 41, 51) angeordneten Innenbehälter (12, 22, 32, 42, 52), eine am Umfang des Innenbehälters (12, 22, 32, 42, 52) angeordnete Wärmedämmschicht (13, 23, 33, 43, 53) und eine Druckbeaufschlagungsvorrichtung (14, 34), wobei zwischen der Hülle (11, 21, 31, 41, 51) und dem Innenbehälter (12, 22, 32, 42, 52) ein Spalt bereitgestellt ist, um in einer Vakuumumgebung einen Sandwichraum zu bilden, die Wärmedämmschicht (13, 23, 33, 43, 53) von der Hülle (11, 21, 31, 41, 51) beabstandet ist und die Druckbeaufschlagungsvorrichtung (14, 34) die Druckbeaufschlagungsvorrichtung (14, 34) nach einem der Ansprüche 1 bis 7 oder die Druckbeaufschlagungsvorrichtung (14, 34) nach einem der Ansprüche 8 bis 13 ist.

15. Kryobehälter (1, 3) nach Anspruch 14, wobei die Hülle (11, 21, 31, 41, 51) ein Außengehäuse (111) umfasst, das mit mindestens einer Öffnung und einer Abdeckplatte (112) versehen ist, wobei
die Abdeckplatte (112) eins zu eins der Öffnung entspricht, wobei die Abdeckplatte (112) an einer entsprechenden Öffnung abgedeckt ist, die Abdeckplatte (112) aus einem niedrigtemperaturbeständigen Material hergestellt ist und ein Befestigungselement (141, 241) fest mit der Abdeckplatte (112) verbunden ist.

## Revendications

1. Dispositif de mise sous pression (14, 34) pour un récipient cryogénique (1, 3), le récipient cryogénique (1, 3) comprenant une coque (11, 21, 31, 41, 51), un récipient interne (12, 22, 32, 42, 52) situé dans la coque (11, 21, 31, 41, 51), et une couche d'isolation thermique (13, 23, 33, 43, 53) agencée sur une périphérie du récipient interne (12, 22, 32, 42, 52), un espace prévu entre la coque (11, 21, 31, 41, 51) et le récipient interne (12, 22, 32, 42, 52) pour former un espace en sandwich dans un environnement sous vide, et la couche d'isolation thermique (13, 23, 33, 43, 53) est espacée de la coque (11, 21, 31, 41, 51), dans lequel le dispositif de mise sous pression (14, 34) comprend :
un élément de fixation (141, 241) situé dans l'espace en sandwich, relié de manière fixe à la coque (11, 21, 31, 41, 51) et espacé du récipient interne (12, 22, 32, 42, 52) ;
un élément en saillie (142, 242, 442, 542) situé dans l'espace en sandwich, relié de manière fixe au récipient interne (12, 22, 32, 42, 52) et faisant saillie hors de la couche d'isolation thermique (13, 23, 33, 43, 53) ; l'élément en saillie (142, 242, 442, 542) est espacé de l'élément de fixation (141, 241) ; et l'élément en saillie (142, 242, 442, 542) est constitué d'un matériau résistant aux basses températures ;
un élément de conduction de chaleur (143, 243, 443, 543) relié de manière rotative à l'élément de fixation (141, 241) ; et l'élément de conduction de chaleur (143, 243, 443, 543) étant constitué d'un matériau résistant aux basses températures ;
un élément d'actionnement (144, 244, 444, 544) agencé à l'extérieur de la coque (11, 21, 31, 41, 51) et pouvant tourner par rapport à la coque (11, 21, 31, 41, 51) ; et
un élément de liaison (145, 245, 445, 545), une extrémité de l'élément de liaison (145, 245, 445, 545) étant reliée de manière fixe à l'élément d'actionnement (144, 244, 444, 544), une autre extrémité de l'élément de liaison (145, 245, 445, 545) s'étendant dans l'espace en sandwich pour être reliée de manière fixe à l'élément de conduction de chaleur (143, 243, 443, 543), et l'élément de liaison (145, 245, 445, 545) pouvant entraîner l'élément de conduction de chaleur (143, 243, 443, 543) à tourner pour venir en butée contre l'élément en saillie (142, 242, 442, 542) ou à tourner pour être espacé de l'élément en saillie (142, 242, 442, 542) en réponse à la rotation de l'élément d'actionnement (144, 244, 444, 544).

2. Dispositif de mise sous pression (14, 34) selon la revendication 1, dans lequel l'élément de liaison (145, 245, 445, 545) s'étend dans l'espace en sandwich à travers un élément de montage (146, 246) ; et
l'élément de montage (146, 246) est situé dans l'espace en sandwich et est fixé et scellé avec la coque (11, 21, 31, 41, 51), l'élément de montage (146, 246) est élastique et peut se replier à l'intérieur de l'espace en sandwich, l'élément de liaison (145, 245, 445, 545) traverse l'élément de montage (146, 246) et est relié de manière fixe à une extrémité de l'élément de montage (146, 246) éloignée de la coque (11, 21, 31, 41, 51).

3. Dispositif de mise sous pression (14, 34) selon la revendication 1, dans lequel le dispositif de mise sous pression (14, 34) comprend en outre un élément de limitation (147, 247) situé dans l'espace en sandwich ; l'élément de limitation (147, 247) et l'élément en saillie (142, 242, 442, 542) sont agencés sur deux côtés opposés de l'élément de fixation (141, 241), de sorte que l'élément de conduction de chaleur (143, 243, 443, 543) tourne entre l'élément de limitation (147, 247) et l'élément en saillie (142, 242, 442, 542) ; et
l'élément de limitation (147, 247) est relié de manière fixe à la coque (11, 21, 31, 41, 51).

4. Dispositif de mise sous pression (14, 34) selon la revendication 3, dans lequel l'élément de limitation (147, 247) comprend une partie de fixation (1471, 2471) reliée de manière fixe à la coque (11, 21, 31, 41, 51) et une partie d'arrêt (1472, 2472) conçue pour venir en butée contre l'élément de conduction de chaleur (143, 243, 443, 543).

5. Dispositif de mise sous pression (14, 34) selon la revendication 3, dans lequel le dispositif de mise sous pression (14, 34) comprend en outre un bloc de positionnement agencé à l'extérieur de la coque (11, 21, 31, 41, 51), le bloc de positionnement étant pourvu d'une première rainure de positionnement et d'une seconde rainure de positionnement ; et lorsque l'élément d'actionnement (144, 244, 444, 544) est tourné pour s'enclencher dans la première rainure de positionnement, l'élément de conduction de chaleur (143, 243, 443, 543) vient en butée contre l'élément de limitation (147, 247), et lorsque l'élément d'actionnement (144, 244, 444, 544) est tourné pour s'enclencher dans la seconde rainure de positionnement, l'élément de conduction de chaleur (143, 243, 443, 543) vient en butée contre l'élément en saillie (142, 242, 442, 542).

6. Dispositif de mise sous pression (14, 34) selon la revendication 1, dans lequel le dispositif de mise sous pression (14, 34) comprend :
un dispositif de mesure de pression (15, 35) en communication avec un intérieur du récipient interne (12, 22, 32, 42, 52) pour mesurer la pression dans le récipient interne (12, 22, 32, 42, 52) ; et
un dispositif d'affichage de pression (16, 36) connecté au dispositif de mesure de pression (15, 35) pour recevoir et afficher la pression dans le récipient interne (12, 22, 32, 42, 52).

7. Dispositif de mise sous pression (14, 34) selon la revendication 1, dans lequel l'élément d'actionnement (144, 244, 444, 544) est relié de manière rotative à la coque (11, 21, 31, 41, 51) au moyen d'un élément d'ajustement (148, 248, 448), dans lequel l'élément d'ajustement (148, 248, 448) est fixé à l'extérieur de la coque (11, 21, 31, 41, 51), une extrémité de l'élément d'actionnement (144, 244, 444, 544) est reliée de manière rotative à l'élément d'actionnement, et une autre extrémité de l'élément d'actionnement (144, 244, 444, 544) est reliée de manière fixe à l'élément d'actionnement (145, 245, 445, 545).

8. Dispositif de mise sous pression (14, 34) pour un récipient cryogénique (1, 3), le récipient cryogénique (1,3) comprenant une coque (11, 21, 31, 41, 51), un récipient interne (12, 22, 32, 42, 52) situé dans la coque (11, 21, 31, 41, 51), et une couche d'isolation thermique (13, 23, 33, 43, 53) agencé sur une périphérie du récipient interne (12, 22, 32, 42, 52), un espace étant prévu entre la coque (11, 21, 31, 41, 51) et le récipient interne (12, 22, 32, 42, 52) pour former un espace en sandwich dans un environnement sous vide, et la couche d'isolation thermique (13, 23, 33, 43, 53) est espacée de la coque (11, 21, 31, 41, 51), dans lequel le dispositif de mise sous pression (14, 34) comprend :
un élément en saillie (142, 242, 442, 542) situé dans l'espace en sandwich, relié de manière fixe au récipient interne (12, 22, 32, 42, 52) et faisant saillie hors de la couche d'isolation thermique (13, 23, 33, 43, 53) ;
un élément de conduction de chaleur (143, 243, 443, 543) conçu pour être souple, une extrémité de l'élément de conduction de chaleur (143, 243, 443, 543) étant reliée de manière fixe à la coque (11, 21, 31, 41, 51), et une autre extrémité de l'élément de conduction de chaleur (143, 243, 443, 543) pouvant s'éloigner de l'élément en saillie (142, 242, 442, 542) ou venir en butée contre l'élément en saillie (142, 242, 442, 542) ; et l'élément de conduction de chaleur (143, 243, 443, 543) est constitué d'un matériau résistant aux basses températures ; et
un élément de liaison (145, 245, 445, 545) s'étendant dans l'espace en sandwich depuis l'extérieur de la coque (11, 21, 31, 41, 51) et étant relié de manière fixe à l'élément de conduction de chaleur (143, 243, 443, 543), et l'élément de liaison (145, 245, 445, 545) s'étendant vers l'extérieur de la coque (11, 21, 31, 41, 51) ;
dans lequel l'élément de liaison (145, 245, 445, 545) peut s'approcher ou s'éloigner de la coque (11, 21, 31, 41, 51) en cours de réalisation d'une force extérieure, et entraîne l'élément de conduction de chaleur (143, 243, 443, 543) à se dilater et à se contracter pour s'éloigner de l'élément en saillie (142, 242, 442, 542) ou à venir en butée contre l'élément en saillie (142, 242, 442, 542).

9. Dispositif de mise sous pression (14, 34) selon la revendication 8, dans lequel l'élément de conduction de chaleur (143, 243, 443, 543) est creux à l'intérieur, une extrémité de l'élément de conduction de chaleur (143, 243, 443, 543) à proximité de la coque (11, 21, 31, 41, 51) est ouverte, et une extrémité de l'élément de conduction de chaleur (143, 243, 443, 543) à proximité du récipient interne (12, 22, 32, 42, 52) est fermé ;
dans lequel l'élément de liaison (145, 245, 445, 545) se présente sous la forme d'une corde ou d'une chaîne et s'étend dans l'élément de conduction de chaleur (143, 243, 443, 543) pour être relié à l'élément de conduction de chaleur (143, 243, 443, 543) ; et
dans lequel l'élément de liaison (145, 245, 445, 545) est relié de manière fixe à l'extrémité de l'élément de conduction de chaleur (143, 243, 443, 543) à proximité du récipient interne (12, 22, 32, 42, 52).

10. Dispositif de mise sous pression (14, 34) selon la revendication 9, dans lequel le dispositif de mise sous pression (14, 34) comprend en outre un élément d'actionnement (144, 244, 444, 544) disposé à l'extérieur de la coque (11, 21, 31, 41, 51) ; l'élément d'actionnement (144, 244, 444, 544) peut tourner par rapport à la coque (11, 21, 31, 41, 51), et l'élément d'actionnement (144, 244, 444, 544) est relié de manière fixe à l'élément de liaison (145, 245, 445, 545) pour entraîner l'élément de liaison (145, 245, 445, 545) dans l'espace en sandwich ou hors de celui-ci ;
dans lequel l'élément d'actionnement (144, 244, 444, 544) est relié de manière rotative à la coque (11, 21, 31, 41, 51) au moyen d'un élément d'ajustement (148, 248, 448), dans lequel l'élément d'ajustement (148,248,448) est fixé à l'extérieur de la coque (11, 21, 31, 41, 51), une extrémité de l'élément d'actionnement (144, 244, 444, 544) est reliée de manière rotative à l'élément d'ajustement (148, 248, 448), et une autre extrémité de l'élément d'actionnement (144, 244, 444, 544) est reliée de manière fixe à l'élément de liaison (145, 245, 445, 545).

11. Dispositif de mise sous pression (14, 34) selon la revendication 8, dans lequel l'élément de conduction de chaleur (143, 243, 443, 543) est creux à l'intérieur, une extrémité de l'élément de conduction de chaleur (143, 243, 443, 543) à proximité de la coque (11, 21, 31, 41, 51) est ouverte, et une extrémité de l'élément de conduction de chaleur (143, 243, 443, 543) à proximité du récipient interne (12, 22, 32, 42, 52) est fermée, dans lequel l'élément de liaison (145, 245, 445, 545) se présente sous une forme d'une tige et s'étend dans l'élément de conduction de chaleur (143, 243, 443, 543), et l'élément de liaison (145, 245, 445, 545) est constitué d'un matériau résistant aux basses températures ; et
dans lequel un point de liaison entre l'élément de liaison (145, 245, 445, 545) et l'élément de conduction de chaleur (143, 243, 443, 543) est situé dans une zone allant d'un centre dans une direction de longueur de l'élément de conduction de chaleur (143, 243, 443, 543) vers une position à proximité du récipient interne (12, 22, 32, 42, 52).

12. Dispositif de mise sous pression (14, 34) selon la revendication 11, dans lequel un déflecteur (549) est agencé dans l'élément de conduction de chaleur (143, 243, 443, 543), dans lequel une périphérie du déflecteur (549) est reliée de manière fixe à une paroi interne de l'élément de conduction de chaleur (143, 243, 443, 543) pour fermer l'extrémité de l'élément de conduction de chaleur (143, 243, 443, 543) à proximité du récipient interne (12, 22, 32, 42, 52), et dans lequel une surface du déflecteur (549) éloigné du récipient interne (12, 22, 32, 42, 52) est reliée de manière fixe à l'élément de liaison (145, 245, 445, 545) ; et
dans lequel le déflecteur (549) est constitué d'un matériau résistant aux basses températures.

13. Dispositif de mise sous pression (14, 34) selon la revendication 11, dans lequel le dispositif de mise sous pression (14, 34) comprend en outre un élément d'actionnement (144, 244, 444, 544) agencé à l'extérieur de la coque (11, 21, 31, 41, 51), l'élément d'actionnement (144, 244, 444, 544) étant relié de manière fixe à une extrémité de l'élément de liaison (145, 245, 445, 545) et faisant saillie à partir d'une périphérie de l'élément de liaison (145, 245, 445, 545).

14. Récipient cryogénique (1, 3) comprenant une coque (11, 21, 31, 41, 51), un récipient interne (12, 22, 32, 42, 52) situé dans la coque (11, 21, 31, 41, 51), une couche d'isolation thermique (13, 23, 33, 43, 53) agencée sur une périphérie du récipient interne (12, 22, 32, 42, 52), et un dispositif de mise sous pression (14, 34), dans lequel un espace est prévu entre la coque (11, 21, 31, 41,51) et le récipient interne (12, 22, 32, 42, 52) pour former un espace en sandwich dans un environnement sous vide, la couche d'isolation thermique (13, 23, 33, 43, 53) est espacée de la coque (11, 21, 31, 41, 51), et le dispositif de mise sous pression (14, 34) est le dispositif de mise sous pression (14, 34) selon l'une quelconque des revendications 1 à 7 ou le dispositif de mise sous pression (14, 34) selon l'une quelconque des revendications 8 à 13.

15. Récipient cryogénique (1, 3) selon la revendication 14, dans lequel la coque (11, 21, 31, 41, 51) comprend un boîtier externe (111) pourvu d'au moins une ouverture et d'une plaque de recouvrement (112), dans lequel la plaque de recouvrement (112) est une correspondance bi-univoque vers l'ouverture, dans lequel la plaque de recouvrement (112) est couverte au niveau d'une ouverture correspondante, la plaque de recouvrement (112) est constituée d'un matériau résistant aux basses températures, et l'élément de fixation (141, 241) est relié de manière fixe à la plaque de recouvrement (112).
